# EUROPEAN PATENT APPLICATION

(11) **EP 2 375 738 A2**
(43) Date of publication of application: **12.10.2011**
(21) Application number: 11161582.9
(22) Date of filing: 07.04.2011
(51) Int. Cl.: H04N 7/01, H04N 21/41

(54) **Playback apparatus and method of controlling a playback apparatus**

(30) Priority: 08.04.2010 JP 2010089772
(71) Applicant: Kabushiki Kaisha Toshiba, Minato-ku, Tokyo 105-8001 (JP)
(72) Inventor: Morikawa, Goichi, Tokyo 105-8001 (JP)
(74) Representative: Henkel, Breuer & Partner

(57) **Abstract**

According to one embodiment, a playback apparatus includes a generating module (523), a graphics processing module (105), and a setting module (532). The (523) configured to generate first moving image data with a first frame rate based on decoded moving image data when the generating module (523) is set in a first mode, and to generate second moving image data with a second frame rate based on the decoded moving image data when the generating module (523) is set in a second mode. The graphics processing module (105) configured to supply a first display module and a second display module with video signals with a third frame rate corresponding to a first refresh rate of the first display module, wherein the graphics processing module (105) causes at least one of the first display module and the second display module to display a moving image based on either the first moving image data or the second moving image data. The setting module (532) configured to set the generating module (523) to the first mode when the moving image is displayed on the first display module, and to set the generating module (523) to the second mode when the moving image is displayed on the second display module.

## Description

Embodiments described herein relate generally to a playback apparatus to generate moving image data, and a playback apparatus control method.

A computer can send a video signal to two or more monitors at a time. When a computer sends a video signal to two or more displays at a time, a picture frame rate is the same for each video signal. The frame rate is determined by a refresh rate of one of the displays (a primary monitor).

Considering the case where a video signal is simultaneously sent to monitors with different refresh rates, tearing may occur when a played back image of moving image data is displayed on a secondary monitor other than a primary monitor.

A general architecture that implements the various features of the embodiments will now be described with reference to the drawing. The drawings and the associated descriptions are provided to illustrate the embodiments and not to limit the scope of the embodiments.
FIG. 1 is a perspective view showing the appearance of a playback apparatus according to an embodiment.
FIG. 2 is a block diagram showing a system configuration of the playback apparatus shown in FIG. 1.
FIG. 3 is a block diagram showing a configuration of a DVD application according to an embodiment.
FIG. 4 is a diagram for explaining I/P conversion when 60-FPS moving image data according to an embodiment is output.
FIG. 5 is a diagram for explaining I/P conversion when 30-FPS moving image data according to an embodiment is output.
FIG. 6 is a view showing that a window to display a played back image of moving image data lies across a primary monitor and a secondary monitor.
FIG. 7 is a flowchart showing a procedure of setting operation mode of a mixer according to an embodiment.

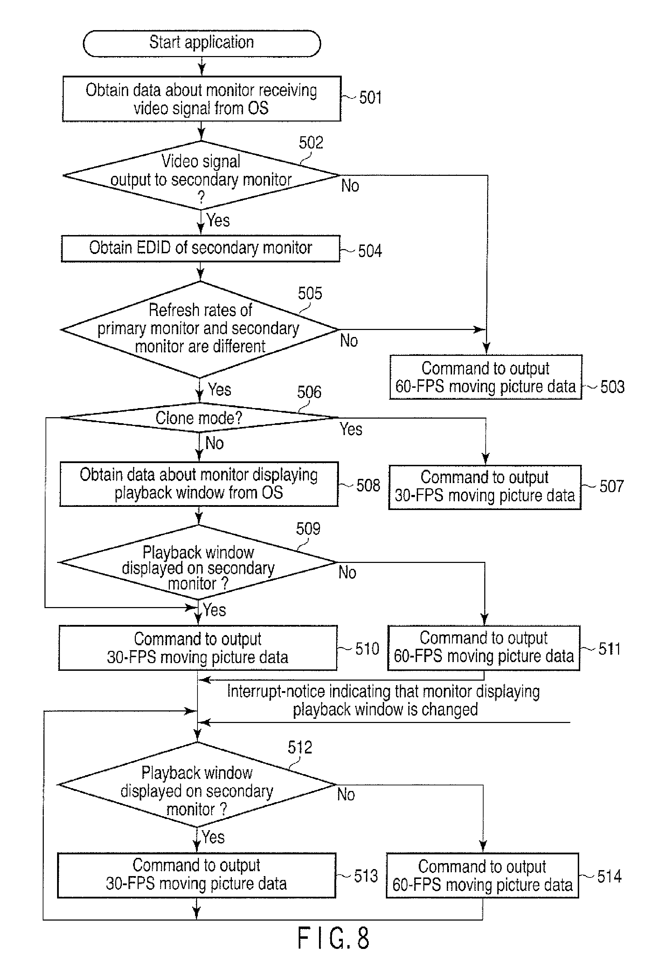

FIG. 8 is a flowchart showing a procedure of setting operation mode of a mixer according to an embodiment.

Various embodiments will be described hereinafter with reference to the accompanying drawings.

In general, according to one embodiment, a playback apparatus includes a generating module, a graphics processing module, and a setting module. The generating module configured to generate first moving image data with a first frame rate based on decoded moving image data if the generating module is set in a first mode, and to generate second moving image data with a second frame rate based on the decoded moving image data if the generating module is set in a second mode. The graphics processing module configured to supply a first display module and a second display module with video signals with a third frame rate corresponding to a first refresh rate of the first display module, wherein the graphics processing module causes at least one of the first display module and the second display module to display a moving image based on either the first moving image data or the second moving image data. The setting module configured to set the generating module to the first mode if the moving image is displayed on the first display module, and to set the generating module to the second mode if the moving image is displayed on the second display module.

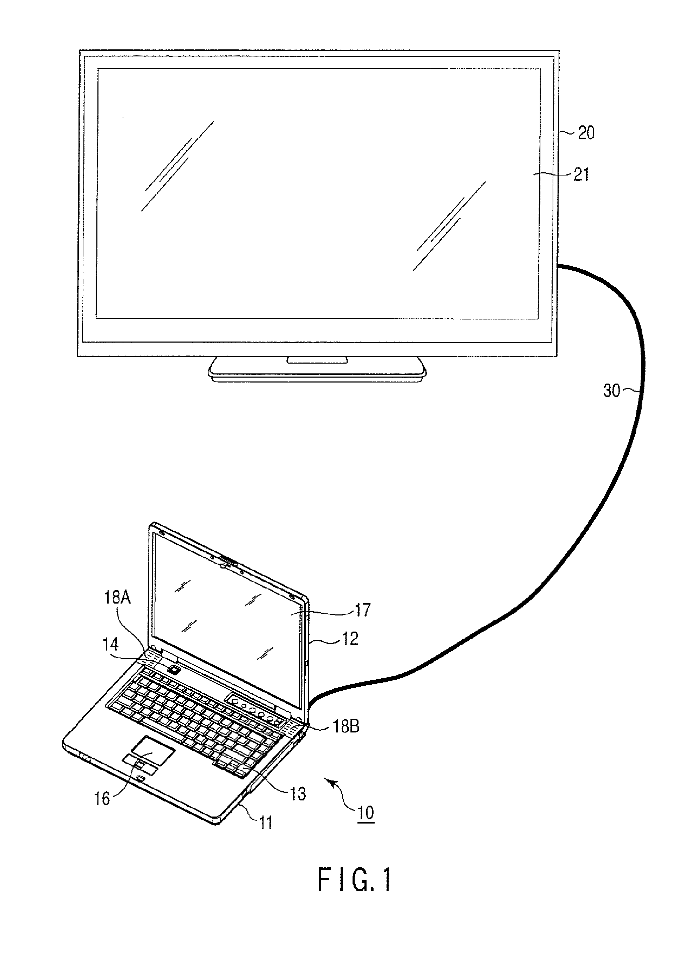

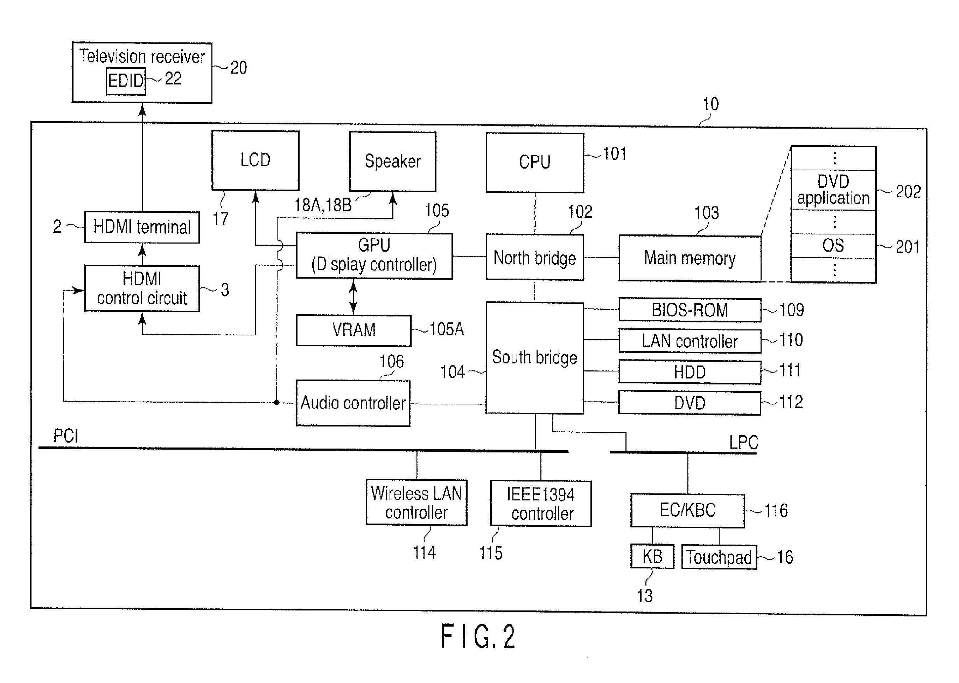

First, the configurations of a playback apparatus and display according to an embodiment are explained with reference to FIGS. 1 and 2. The playback apparatus according to the embodiment is realized by a notebook-size personal computer 10, and the display is realized by a television receiver, for example.

The personal computer 10 has a function of playback a DVD-Video stored in a DVD. The DVD playback function is realized by a DVD application program previously installed in the personal computer.

FIG. 1 is a perspective view of the computer 10 with a display unit opened. The computer 10 comprises a computer main unit 11, and a display unit 12. The display unit 12 includes a display comprising a Thin Film Transistor Liquid Crystal Display (TFT-LCD) 17.

The display unit 12 is pivotally fixed to the computer main unit 11 to be rotatable from the closed position covering the top face of the computer main unit 11, to the opened position exposing the top face of the computer main unit 11. The computer main unit 11 is housed in a thin box-shaped case. On the surface of the computer main unit 11, a keyboard 13, a power button 14 to turn on/off the computer 10, a touchpad 16, and speakers 18A and 18B are provided.

On the back of the computer main unit 11, an external display connection terminal, which conforms to the High-Definition Multimedia Interface (HDMI) standard, is provided. The external display connection terminal is used to output video data (moving image data) included in video content data such as broadcast program data, to a television 20 through an HDMI cable.

The television 20 conforms to the Phase Alternating Line (PAL) broadcast standard. The television 20 includes a display panel comprising a TFT-LCD 21.

Next, an explanation will be given of a system configuration of the computer 10 and a configuration of the television 20 by referring to FIG. 2.

The television 20 contains extended display identification data (EDID) 22. The EDID 22 is stored in a flash memory. The EDID 22 is data to be sent to a graphics processing unit (GPU) 105 which receives data (vendor name, model number, resolution, refresh rate, etc.) peculiar to a display. An application operated in the computer 10 can obtain the EDID 22 through a driver to control the GPU 105.

As shown in FIG. 2, the computer 10 comprises a CPU 101, a north bridge 102, a main memory 103, a south bridge 104, a graphics processing unit (GPU) 105, a video memory (VRAM) 105A, a sound controller 106, a BIOS-ROM 109, a LAN controller 110, a hard disk drive (HDD) 111, a DVD drive 112, a wireless LAN controller 114, an IEEE 1394 controller 115, and an embedded controller/keyboard controller IC (EC/KCBC) 116.

The CPU 101 is a processor to control the operations of the computer 10, and executes various application programs loaded into the main memory 103 from the hard disk drive (HDD) 111, such as an operating system (OS) 201, and a DVD application program 202. The DVD application program 202 is software to plays back a DVD loaded in the DVD drive 112. The CPU 101 executes a Basic Input/Output System (BIOS) stored in the BIOS-ROM 109. The BIOS is a program to control hardware.

The north bride 102 is a bridge device to connect the local bus of the CPU 101 and south bridge 104. The north bridge 102 contains a memory controller to control an access to the main memory 103. The north bride 102 has a function of communicating with the GPU 105 through a serial bus conforming to the PCI EXPRESS Standard.

The GPU 105 is a display controller to control an LCD 17 used as a display monitor of the computer 10. The GPU 105 uses the VRAM 105 as a work memory. A video signal generated by the GPU 105 is sent to LCD 17. The GPU 105 can send a digital video signal to LCD 21 in the television 20 through an HDMI control circuit 3 and HDMI terminal 2. The GPU 105 comprises a plurality of arithmetic processors, and is configured to generate a display signal, and execute a pixel shader by using at least one of the arithmetic processors. The GPU 105 can execute a programmed pixel shader. For example, the video data quality is improved by the pixel shader.

When a video signal is applied to LCD 17 and LCD 21, a picture frame rate corresponding to each video signal is the same. The frame rate corresponds to a refresh rate of LCD 17.

The HDMI terminal 2 is the above-mentioned external display connection terminal. The HDMI terminal 2 can send an uncompressed digital video signal and digital audio signal to the television 20 by one cable. The HDMI control circuit 3 is an interface to send a digital video signal to the television 20 called an HDMI monitor through the HDMI terminal.

The south bridge 104 controls devices on a Low Pin Count (LPC) bus, and devices on a Peripheral Component Interconnect (PCI) bus. The south bridge 104 contains an Integrated Drive Electronics (IDE) controller to control the hard disk drive (HDD) 111 and DVD drive 112. Further, the south bridge 104 has a function of communicating with the sound controller 106.

The sound controller 106 is a sound source device, which outputs playback audio data to the speakers 18A and 18B, or the HDMI control circuit 3.

The wireless LAN controller 114 is a wireless communication device to execute wireless communication conforming to the IEEE 802.11 standard, for example. The IEEE 1394 controller 115 communicates with an external device through a serial bus conforming to the IEEE 1394 standard.

The embedded controller/keyboard controller IC (EC/KBC) 116 is a one-chip microcomputer incorporating an embedded controller to control power, and a keyboard controller to control the keyboard (KB) 13 and touchpad 16. The embedded controller/keyboard controller IC (EC/KBC) 116 has a function of turning on/off the computer 10 by the user's operation of the power button 14.

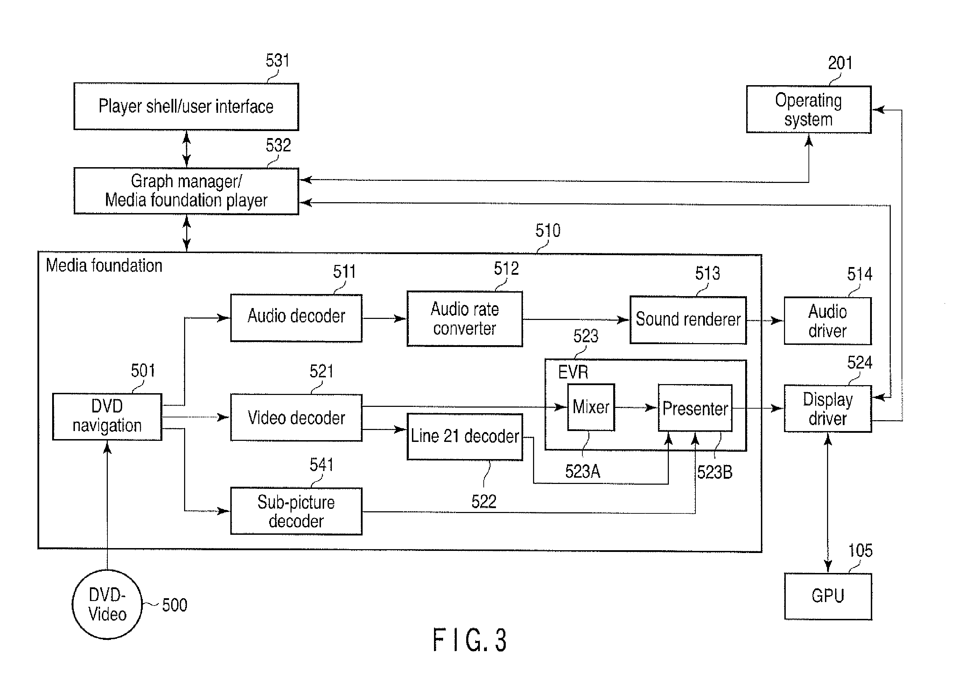

FIG. 3 shows the configuration of the DVD application program 202 executed by the CPU 101 of the apparatus for playback. This player software uses a technology called Media Foundation executed under Windows® environments or Microsoft operating systems. Media Foundation is a Windows multimedia platform. It generates topology to flow media data by using three kinds of pipeline components, Media Source, Transform, and Media Sink. Media Source is a component to handle input data and to generate media data, Transform is a component located at the middle of processing media data, such as a decoder, and Media Sink is a component to output media data, such as a renderer.

DVD-Video data reproduced by the DVD drive 112 is sent to a DVD navigation 501. DVD-Video data is coded by Content Scramble System (CSS). The navigation 501 decodes coded data, and separates a video pack (V_PCK), sub-picture pack (SP_PCK), and audio pack (A_PCK) from the decoded data. The navigation 501 transfers an audio pack (A_PCK) to an audio decoder 511. The navigation 501 transfers a video pack (V_PCK) and sub-picture pack (SP_PCK) to a sub-picture decoder 541.

DVD-Video stores interlaced 30-FPS moving image data. When a DVD is played and a moving image is displayed on LCD 17, a progressive 60-FPS moving image is displayed by generating one frame picture from an adjacent field picture.

The audio decoder 511 extends and converts compressed coded audio data into uncompressed audio data, and transfers the audio data to an audio rate converter 512. The audio rate converter 512 converts the audio data to an appropriate sampling rate, and transfers it to a sound renderer 513. The sound renderer 513 combines the transferred audio data and the audio data generated by other software operating on the computer, and transfers the combined data to an audio driver 514. The audio driver 514 controls the sound controller 106, and outputs the audio data as a sound from the speakers 18A and 18B.

When data of line 21 is included in the video decoder 521, the data of line 21 is transferred to a line 21 decoder 522. The video decoder 521 generates a field picture by decoding a video pack (V_PCK). The sub-picture decoder 541 decodes a sub-picture pack (SP_PCK). The decoded data is sent to an extended video renderer 523.

A mixer 523A in the extended video renderer performs interlaced/progressive (I/P) conversion for a plurality of frames transferred from the video decoder 521, and generates a frame image from a field image. The generated frame image is transferred to a presenter 523.

The presenter 523B combines the frame image with a sub-picture (an extended sub-picture) or a closed capture, and renders a frame.

Moving picture data output from the presenter 523B is transferred to a display driver 524. The display driver 524 controls the GPU 105, and displays a moving image on LCD 17.

A player shell/user interface 531 performs operations associated with display of a playback control panel. The shell/user interface 531 sends a command corresponding to the button operated by the user, to Media Foundation 510 through a graph manager/Media Foundation player 532. Media Foundation 510 controls topology comprising the navigation 501, audio decoder 511, and video decoder 521, according to the received command.

A refresh rate of LCD 17 provided in the computer 10 is generally 60 Hz. The frame rate of a picture output from the GPU 105 to LCD 17 is 60 frames per second (FPS). On the other hand, the refresh rate of LCD 21 in the television 20 conforming to the PAL broadcast standard is 50 Hz.

When a played back image of DVD-Video with a frame rate of 60 FPS is displayed on LCD 21 with a refresh rate of 50 Hz, tearing may occur in the played back image.

It is proved by the inventor that tearing can be prevented by changing a frame rate of a played back image of DVD-Video applied to the GPU 105. For example, by changing the frame rate to 30 FPS, tearing can be prevented.

The graph manager/Media Foundation player 532 normally sets the mixer 523A to a first mode, but sets it to a second mode when tearing occurs in a played back image displayed on LCD 21.

More specifically, when a played back image of DVD-Video is not displayed on LCD 21, the graph manager/Media Foundation player 532 sets the first mode in which 60-FPS video data is input to the GPU 105. When a played back image of DVD-video is displayed on LCD 21, the graph manager/Media Foundation player 532 sets the second mode in which 30-FPS video data is input to the GPU 105.

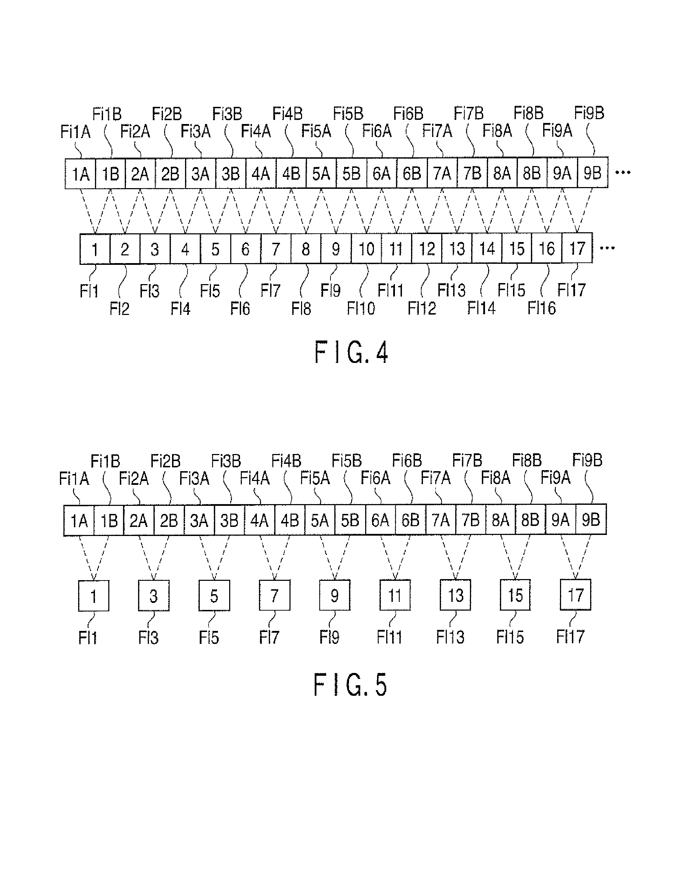

In the first mode in which a 60-FPS image is output, the mixer 523A generates a frame image by using an adjacent field image. As shown in FIG. 4, the mixer 523A sequentially generates 60-FPS frame images F11, Fl2, ... , Fl17 from field images FilA, FilB, Fi2A, Fi2B, ... , Fi9A, Fi9B sequentially input from the video decoder 521, by using an adjacent field image, and outputs the generated frame images Fl1, Fl2, ... , F117 to the presenter 523B. As a result, the 60-FPS moving image data is output from the presenter 523B to the GPU 105 through the driver 524.

In the second mode in which a 30-FPS image is output, the mixer 523A generates a frame image by using a field image in the same frame. As shown in FIG. 5, the mixer 523A sequentially generates 30-FPS frame images F11, Fl3, Fl5, ... , Fl17 from field images FilA, FilB, Fi2A, Fi2B, ... , Fi9A, Fi9B sequentially input from the video decoder 521, by using a field image in the same frame, and outputs the generated frame images Fl1, Fl3, Fl5, ... , Fl17 to the presenter 523B. As a result, the 30-FPS moving image data is output from the presenter 523B to the GPU 105 through the driver 524.

As described above, a frame rate can be changed simply by changing a method of generating a frame image of the mixer 523A.

Next, a procedure of changing a frame rate will be explained. In the following description, it is assumed that LCD 17 in the computer 10 is a primary monitor 17, and LCD 21 in the television 20 is a secondary monitor 21.

First, the graph manager/Media Foundation player 532 determines whether a video signal is applied to the HDMI terminal 2 through the HDMI cable 30 at the time of startup, as an output to the secondary monitor 21 as an external display. When a video signal is output to the secondary monitor, the player 532 determines whether a display is in clone mode or extended desktop mode (dual view). In clone mode, the same image is displayed on the primary monitor 17 and secondary monitor 21. In extended desktop mode, the display areas of the primary monitor 17 and secondary monitor 21 are handled as one desktop, and different images are displayed on the primary monitor 17 and secondary monitor 21.

When the display is in clone mode, the graph manager/Media Foundation player 532 instructs the mixer 523A to output a 30-FPS image.

When the display is in extended desktop mode, the graph manager/Media Foundation player 532 asks the operating system 201 to determine which monitor, the primary monitor 17 or secondary monitor 21, displays a window displaying DVD-Video.

When the whole window displaying DVD-Video is displayed on the primary monitor 17, the operating system 201 determines that a playback window is present in the primary monitor 17. When the whole window displaying DVD-Video lies on the secondary monitor 21, the operating system 201 determines that the playback window is present in the secondary monitor 21.

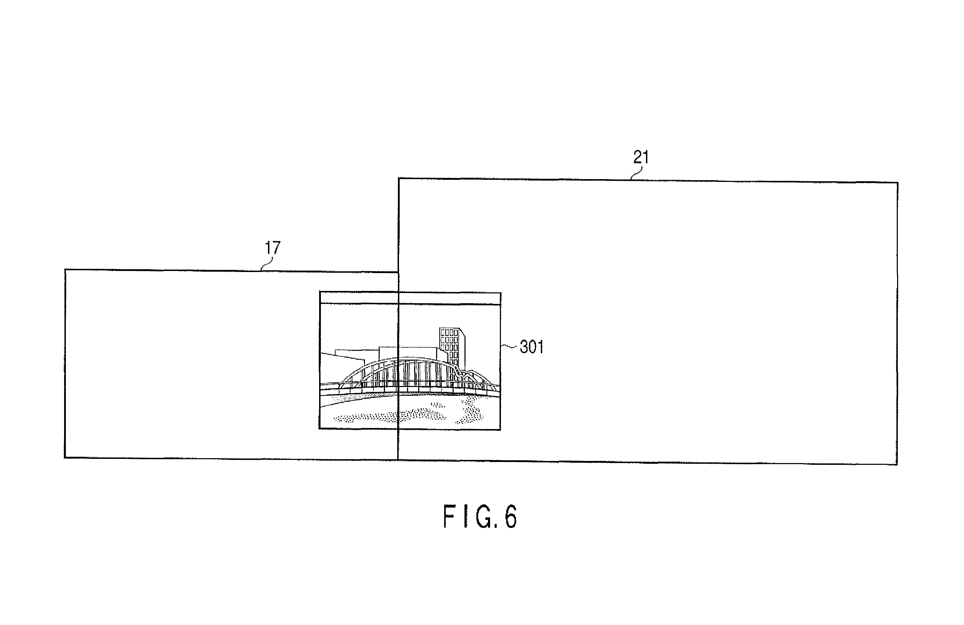

When the playback window lies across the primary monitor 17 and secondary monitor 21, the monitor, to which monitor the playback window belongs is determined as follows. As shown in FIG. 6, the playback window 301 lies across the primary monitor 17 and secondary monitor 21. In this case, the areas of the playback window 301 displayed on the primary monitor 17 and secondary monitor 21 are compared, and the monitor (LCD) displaying a larger area is considered to be the monitor displaying the playback window 301. A monitor (LCD) displaying the playback window 301 can also be known by determining an LCD displaying a line HL indicating the lateral half of the playback window 301.

When the display position of the playback window 301 and the LCD displaying the playback window 301 is changed, the operating system 201 interrupts and informs the graph manager/Media Foundation player 532 that the monitor displaying the playback window 301 is changed.

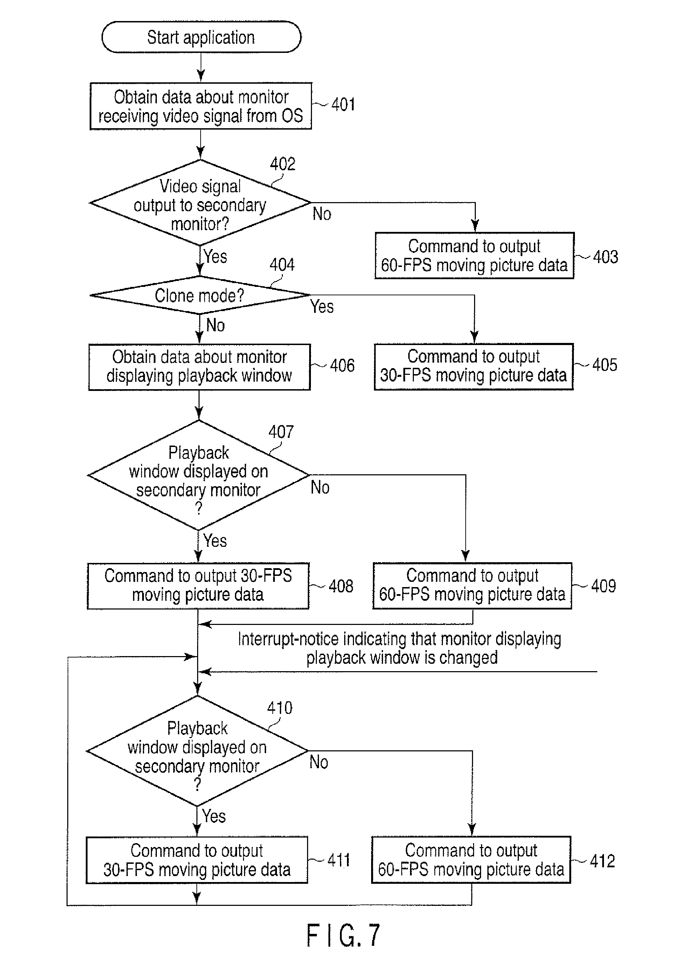

The flow of above operations will be explained by referring to the flowchart shown in FIG. 7.

When the DVD application program 202 is started, the graph manager/Media Foundation player 532 inquires the operating system 201 about a monitor outputting a video signal, and obtains data about the monitor from the operating system 201 (block 401).

Based on the obtained data, the graph manager/Media Foundation player 532 determines whether a video signal is output to the secondary monitor 21 (block 402). When the video signal is not output to the secondary monitor 21 (No in block 402), the graph manager/Media Foundation player 532 sends the mixer 523A a command to set the first mode, in which 60-FPS video data is output, and I/P conversion is performed (block 403).

When the video signal is output to the secondary monitor 21 (Yes in block 402), the graph manager/Media Foundation player 532 inquires the operating system 201 about a display mode of the secondary monitor 21, and determines whether the display is in clone mode based on the result of inquiry (block 404). When the display is in clone mode (Yes in block 404), the graph manager/Media Foundation player 532 sends the mixer 523A a command to set the second mode, in which 30-FPS video data is output and I/P conversion is performed (block 405). When the display is not in clone mode (No in step 404), the graph manager/Media Foundation player 532 obtains data about the monitor displaying the playback window 301 from the driver 524 (block 406).

Based on the obtained data, the graph manager/Media Foundation player 532 determines whether the playback window 301 is displayed on the secondary monitor 21 (block 407). When the playback window 301 is displayed on the secondary monitor 21 (Yes in block 407), the graph manager/Media Foundation player 532 sends the mixer 523A a command to set the second mode in which 30-FPS video data is output and I/P conversion is formed (block 408). When the playback window 301 is not displayed on the secondary monitor 21 (No in block 407), the graph manager/Media Foundation player 532 sends the mixer 523A a command to set the first mode in which video data of 60 DPS is output and I/P conversion is performed (block 409).

When a notice stating that the display monitor displaying the playback window 301 is changed is received from the operating system 201, after block 408 or 409, the graph manager/Media Foundation player 532 determines whether the playback window 301 is displayed on the secondary monitor 21 (block 410). When the playback window 301 is displayed on the secondary monitor 21 (Yes in block 410), the graph manager/Media Foundation player 532 sends the mixer 523A a command to output 30-FPS video data and perform I/P conversion (block 411). When the playback window 301 is not displayed on the secondary monitor 21 (No in block 410), the graph manager/Media Foundation player 532 sends the mixer 523A a command to output 60-FPS video data and perform I/P conversion (block 412).

By the above operations, tearing can be prevented by changing a frame rate of video data, when the playback window 301 is displayed on the secondary monitor 21.

In the above operations, when the playback window 301 is displayed on the secondary monitor 21, a frame rate of video data is changed regardless of a refresh rate of the secondary monitor 21. Because, Windows specifications define that an application operated on the operating system 201 cannot obtain EDID 22 of the secondary monitor 21. In another embodiment described later, the Windows specifications are changed, and an application operated on the operating system 201 can obtain a refresh rate of the secondary monitor 21.

When the DVD application program 202 is started, the graph manager/Media Foundation player 532 determines whether a video signal is output to the secondary monitor 21 (block 501). Based on the obtained data, the graph manager/Media Foundation player 532 determines whether a video signal is output to the secondary monitor 21 (block 502).

When a video signal is not output to the secondary monitor 21 (No in block 502), the graph manager/Media Foundation player 532 sends the mixer 523A a command to output 60-FPS video data and perform I/P conversion (block 503). When a video signal is output to the secondary monitor 21 (Yes in block 502), the graph manager/Media Foundation player 532 obtains the EDID 22 of the secondary monitor 21 through the driver 524 (block 504).

Based on the obtained EDID 22, the graph manager/Media Foundation player 532 determines whether the refresh rates of the primary monitor 17 and secondary monitor 21 are different (block 505).

When the refresh rates are not different (No in block 505), the graph manager/Media Foundation player 532 sends the mixer 523A a command to output 60-FPS video data and perform I/P conversion (block 503).

When the refresh rates are different (Yes in block 505), the graph manager/Media Foundation player 532 inquires the operation system 201 about the display mode of the secondary monitor 21, and determines whether the display is in clone mode based on the result of inquiry (sep 506). When the display is in clone mode (Yes in block 506), the graph manager/Media Foundation player 532 sends the mixer 523A a command to output 30-FPS video data and perform I/P conversion (block 507). When the display is not in clone mode (No in block 506), the graph manager/Media Foundation player 532 obtains data about the monitor displaying the playback window 301 from the operation system 201 (block 508).

Based on the obtained data, the graph manager/Media Foundation player 532 determines whether the playback window 301 is displayed on the secondary monitor 21 (block 509). When the playback window 301 is displayed on the secondary monitor 21 (Yes in block 509), the graph manager/Media Foundation player 532 sends the mixer 523A a command to set the second mode, in which 30-FPS video data is output and I/P conversion is performed (block 510). When the playback window 301 is not displayed on the secondary monitor 21 (No in block 509), the graph manager/Media Foundation player 532 sends the mixer 523A a command to set the first mode, in which 60-FPS video data is output and I/P conversion is performed (block 511).

When a notice stating that the display monitor displaying the playback window 301 is changed is received from the operating system 201, after block 510 or 511, the graph manager/Media Foundation player 532 determines whether the playback window 301 is displayed on the secondary monitor 21 (block 512). When the playback window 301 is displayed on the secondary monitor 21 (Yes in block 512), the graph manager/Media Foundation player 532 sends the mixer 523A a command to set the second mode, in which 30-FPS video data is output and perform I/P conversion is performed (block 513). When the playback window 301 is not displayed on the secondary monitor 21 (No in block 512), the graph manager/Media Foundation player 532 sends the mixer 523A a command to set the first mode, in which 60-FPS video data is output and perform I/P conversion is performed (block 514).

By the above operations, tearing can be prevented by changing a frame rate of video data, when the playback window 301 is displayed on the secondary monitor 21 whose refresh rate is different from that of the primary monitor 17.

A computer program can decode moving image data encoded in the embodiment, and generate moving image data to be input to a graphics processor based on the decoded moving image data. Therefore, the same effects as the embodiment can be easily realized simply by installing the computer program into a computer through a storage medium readable by a computer. The computer program can be executed not only in a personal computer, but also in any electronic devices with a built-in processor.

## Claims

1. A playback apparatus **characterized by** comprising:
a generating module (523) configured to generate first moving image data with a first frame rate based on decoded moving image data if the generating module (523) is set in a first mode, and to generate second moving image data with a second frame rate based on the decoded moving image data if the generating module (523) is set in a second mode;
a graphics processing module (105) configured to supply a first display module (17) and a second display module (21) with video signals with a third frame rate corresponding to a first refresh rate of the first display module (17), wherein the graphics processing module (105) causes at least one of the first display module (17) and the second display module (21) to display a moving image based on either the first moving image data or the second moving image data; and
a setting module (532) configured to set the generating module (523) to the first mode if the moving image is displayed on the first display module (17), and to set the generating module (523) to the second mode if the moving image is displayed on the second display module (21).

2. The apparatus of Claim 1, **characterized by** further comprising a display unit (12) comprising the first display module (17),
wherein the second display module (21) comprises an external display module.

3. The apparatus of Claim 1, **characterized by** further comprising a determination module (201) configured to determine that the moving image is displayed on the first display module (17) if a display mode of the second display module (21) is an extended desktop mode, a window comprising the moving image is displayed on the first display module (17) and the second display module (21), and a ratio of a first part of the window which is displayed on the first display module (17) to the window is larger than a ratio of a second part of the window which is displayed on the second display module (21) to the window; to determine that the moving image is displayed on the second display module (21) if the display mode is the extended desktop mode, the window is displayed on the first display module (17) and the second display module (21), and a ratio of the second part to the window is larger than a ratio of the first part to the window; and to notify a determination result showing that a display module on which the moving image is displayed to the setting module (532).

4. The apparatus of Claim 3, **characterized in that** the determination module (201) is configured to determine whether a display module displaying the moving image is switched from one of the first display module (17) and the second display module (21) to another one of the first display module (17) and the second display module (21), and to notify the setting module (532) that the display module is switched when the determination module (201) determines that the display module displaying the window is switched, and
the setting module (532) is configured to set the generating module (523) to one of the first and second modes based on the a notification from the determination module (201).

5. The apparatus of Claim 1, **characterized by** further comprising a receiving module (201) configured to receive a second refresh rate of the second display module (21),
wherein the setting module (532) is configured to set the generating module (523) to the first mode when the first refresh rate and the second refresh rate are the same and the moving image is displayed on the second display module (21), and to set the generating module (523) to the second mode when the first refresh rate and the second refresh rate are different and the moving image is displayed on the second display module (21).

6. A method of controlling a playback apparatus, the apparatus configured to generate moving image data to be input to a graphics processing module based on decoded moving image data,
wherein the graphics processing module supplies a first display module and a second display module with video signals with a first frame rate corresponding to a first refresh rate of the first display module, and causes to at least one of the first display module and the second display module to display a moving image based on the generated moving image data, and
the method **characterized by** comprising:
switching a frame rate of the generated moving image data to a first frame rate when the moving image is not displayed on the second display module; and
switching a frame rate of the generated moving image data to a second frame rate when the moving image is displayed on the second display module.

7. The method of Claim 6, **characterized by** further comprising:
determining that the moving image is displayed on the first display module when a display mode of the second display module is an extended desktop mode, a window comprising the moving image is displayed on the first display module and the second display module, and a ratio of a first part of the window which is displayed on the first display module to the window is larger than a ratio of a second part of the window which is displayed on the second display module; and
determining that the moving image is displayed on the second display module when the display mode of the second display module is the extended desktop mode, the window is displayed on the first display module and the second display module, and a ratio of the second part to the window is larger than a ratio of the first part to the window.

8. The method of Claim 7, **characterized by** further comprising:
determining whether a display module displaying the window is switched from one of the first display module or second display module to another one of the first display module or second display module; and
switching a frame rate of the generated moving image data from one of the first frame rate and the second frame rate to another one of the first frame rate and the second frame rate when it is determined that the display module displaying the window is switched.

9. The method of Claim 6, **characterized by** further comprising:
receiving a second refresh rate of the second display module;
switching a frame rate of the generated moving image data to the first frame rate when the first refresh rate and second refresh rate are the same; and
switching a frame rate of the generated moving image data to the second frame rate, when the first refresh rate and the second refresh rate are different, and the moving image is displayed on the second display module.

10. A program executed by a computer, the program which causes the computer to generate moving image data to be input to a graphics processing module based on decoded moving image data,
wherein the graphics processing module supplies a first display module and a second display module with video signals with a first frame rate corresponding to a first refresh rate of the first display module, and causes at least one of the first display module and the second display module to display a moving image based on the generated moving image data, and
**characterized in that** the program causes the computer to:
switch a frame rate of the generated moving image data to a first frame rate when the moving image is not displayed on the second display module; and
switch a frame rate of the generated moving image data to a second frame rate when the moving image is displayed on the second display module.

11. The program of Claim 10, **characterized in that** the program further causes the computer to:
receive a second refresh rate of the second display module;
switch a frame rate of the generated moving image data to the first frame rate when the first refresh rate and second refresh rate are the same; and
switch a frame rate of the moving image data to the second frame rate when the first refresh rate and second refresh rate are different, and the moving image is displayed on the second display module.
